(19) **Europäisches Patentamt**

**European Patent Office**

**Office européen des brevets**

(11) Veröffentlichungsnummer : **0 417 505 B1**

(12) # EUROPÄISCHE PATENTSCHRIFT

(45) Veröffentlichungstag der Patentschrift :
**28.04.93 Patentblatt 93/17**

(51) Int. Cl.$^5$ : **C01B 25/41**

(21) Anmeldenummer : **90115974.9**

(22) Anmeldetag : **21.08.90**

(54) Verfahren zur Herstellung von Natriumtripolyphosphat.

(30) Priorität : **09.09.89 DE 3930156**

(43) Veröffentlichungstag der Anmeldung :
**20.03.91 Patentblatt 91/12**

(45) Bekanntmachung des Hinweises auf die
Patenterteilung :
**28.04.93 Patentblatt 93/17**

(84) Benannte Vertragsstaaten :
**DE NL**

(56) Entgegenhaltungen :
**EP-A- 0 071 040**
**GB-A- 1 100 863**
**GB-A- 1 161 282**

(56) Entgegenhaltungen :
**GB-A- 1 204 570**
**CHEMICAL ABSTRACTS, Band 95, Nr. 24, 14.**
**Dezember 1981, Seite 136, Zusammenfassung**
**Nr. 206250b, Columbus, Ohio, US; & SU-A-835**
**952 (BELORUSSIAN TECHNOLOGICAL INSTI-**
**TUTE) 07-06-1981**

(73) Patentinhaber : **HOECHST**
**AKTIENGESELLSCHAFT**
**Postfach 80 03 20**
**W-6230 Frankfurt am Main 80 (DE)**

(72) Erfinder : **Kowalski, Werner**
**Am Ginsterberg 7**
**W-5354 Weilerswist (DE)**
Erfinder : **Ehlers, Klaus-Peter, Dr.**
**Am Steinfeld 5**
**W-5042 Erftstadt (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein Verfahren zur Herstellung von Natriumtripolyphosphat durch Einbringen einer Natriumorthophosphatlösung, welche durch Neutralisation von mindestens teilweise durch Fällungsreinigung von durch Aufschluß von Rohphosphaten mit starken Mineralsäuren gewonnener Rohphosphorsäure erhalten und mit Hilfe der Abgase des Sprühturmes aufkonzentriert worden ist und 66,6 Gewichts% Diphosphat und 33,4 Gewichts% Monophosphat enthält, in den oberen Teil eines Sprühturmes, Versprühen der Natriumorthophosphatlösung im Sprühturm mittels mindestens einer Düse durch eine von mehreren kreisförmig angeordneten Brennern erzeugte Flammzone und Sammeln des pulverigen Natriumtripolyphosphates im unteren Teil des Sprühturmes.

Es ist bekannt, Alkaliphosphate durch Versprühen von wäßrigen Alkaliphosphatlösungen, welche auf das entsprechende Alkalioxid-$P_2O_5$-Verhältnis eingestellt sind, in einem zylindrischen Sprühturm zu erhalten. Dabei wird der Deckel des Sprühturmes zentrisch von einem Zuführungsrohr für die Alkaliphosphatlösung durchdrungen, welches in einer oder mehreren Düsen endet. Auf einer zum Zuführungsrohr konzentrischen Kreislinie wird der Deckel von mehreren, mit Abstand voneinander angeordneten Brennern durchdrungen, wobei die zerstäubte Alkaliphosphatlösung beim Passieren der vom Brennerkranz erzeugten Flammzone zunächst eingedampft und anschließend die Phosphate kondensiert werden. Schließlich werden die kondensierten Phosphate im unteren Bereich des Sprühturmes gesammelt, bevor sie an dessen Spitze ausgetragen werden (vergl. US-A-3 499 476; US-A-4 501 639).

Beim Verfahren zur Herstellung von kondensierten Alkaliphosphaten nach der US-A-3 433 585 werden Phosphatlösungen, welche aus durch Naßausschluß von Rohphosphaten gewonnener, gereinigter und bis zu dem den Endprodukten entsprechenden Alkalioxid-$P_2O_5$-Verhältnis neutralisierter Phosphorsäure erhalten wurden, mit Fluorgehalten von 100 bis 5000 ppm, bezogen auf $P_2O_5$, und Feststoffgehalten von 40 bis 70 Gewichts% in einem einstufigen Verfahren in einem Sprühturm versprüht, wobei die Temperatur im Sprühturm so gewählt wird, daß die Temperatur im Abgas über 300°C beträgt und ein Feuchtigkeitsgehalt von 150 bis 400 g Wasser pro kg Abgas aufrechterhalten wird.

Zur Herstellung eines hochprozentigen Natriumtripolyphosphates ist es notwendig, daß das $Na_2O$ : $P_2O_5$-Verhältnis in der Alkaliorthophosphatlösung genau auf 1,666 : 1 eingestellt wird, da eine Abweichung in den alkalischen Bereich zur vermehrten Bildung von Natriumpyrophosphat führt, während bei einer Abweichung in den sauren Bereich teilweise Natriummetaphosphat gebildet wird.

Die Bestimmung des $Na_2O$ : $P_2O_5$-Verhältnisses in der Natriumorthophosphatlösung erfolgt durch zwei Titrationen mit Maßlösungen; und zwar mit Schwefelsäure bis zum Monophosphat-Punkt (pH 4,5) und mit Natronlauge bis zum Diphosphat-Punkt (pH 9,0). Dabei muß der Diphosphat-Gehalt 66,6 Gewichts% und der Monophosphat-Gehalt 33,4 Gewichts% betragen, um die oben erwähnten Nebenreaktionen zu vermeiden.

Fluorhaltige Verbindungen in der Natriumorthophosphatlösung verfälschen die Titrationsergebnisse; so reagiert beispielsweise Natriumaluminiumfluorid sowohl mit Natronlauge als auch mit Schwefelsäure, wobei die Fluorkomplexe von Eisen, Titan und Zirkon ähnlich reagieren.

Natriumorthophosphatlösungen, die durch Aufschluß von Rohphosphaten mit Mineralsäure und Fällungsreinigung erhalten wurden, weisen schwankende Fluorgehalte auf, insbesondere dann, wenn sie durch Inberührungbringen mit den heißen, fluorhaltigen Abgasen des Sprühturmes gemäß der US-A-3 557 864 aufkonzentriert wurden. Bei diesen Natriumorthophosphatlösungen treten besonders schwerwiegende Titrationsfehler auf. Aus diesem Grund war es bisher nicht möglich, Natriumorthophosphatlösungen mit einem höheren Anteil an durch Fällungsreinigung erhaltener Lösung zur Herstellung von qualitativ hochwertigem Natriumtripolyphosphat unter reproduzierbaren Betriebsbedingungen zu verwenden.

Überraschenderweise wurde nun gefunden, daß bei einem Verfahren zur Herstellung von Natriumtripolyphosphat der erwähnte Nachteil überwunden werden kann, wenn man der Natriumorthophosphatlösung während ihrer Aufkonzentrierung eine kieselsäurehaltige Verbindung zusetzt.

Das erfindungsgemäße Verfahren kann weiterhin wahlweise auch noch dadurch ausgestaltet sein, daß

a) man die kieselsäurehaltige Verbindung entsprechend 0,05 bis 0,5 Gewichts% $SiO_2$, bezogen auf den $P_2O_5$-Gehalt der Natriumorthophosphatlösung, zusetzt;

b) man bis zu 0,3 Gewichts% $SiO_2$ zusetzt;

c) man als kieselsäurehaltige Verbindung Natronwasserglas zusetzt.

Mit dem Verfahren gemäß der Erfindung wird ein Natriumtripolyphosphat von hoher Qualität (mit mindestens 96 Gewichts% $Na_5 P_3 O_{10}$) erhalten.

Beim erfindungsgemäßen Verfahren können Natriumorthophosphatlösungen eingesetzt werden, deren $P_2O_5$-Anteil bis zu 78 % aus Phosphatlösung besteht, welche durch Fällungsreinigung von durch Aufschluß von Rohphosphat mit Mineralsäure gewonnener Rohphosphorsäure erhalten wurde.

Beim Verfahren gemäß der Erfindung wird durch den Zusatz der kieselsäurehaltigen Verbindung offenbar das gesamte Fluor, das einerseits aus der Rohphosphorsäure stammt und andererseits aus den Abgasen des Sprühturmes absorbiert wurde, in Natriumfluorosilicat umgewandelt, wobei der Einfluß dieser Verbindung überraschender Weise darin besteht, daß

1) bei der Durchführung der Titrationen andere, jedoch stets reproduzierbare Werte gefunden werden als dies in kieselsäurearmen oder kieselsäurefreien Lösungen der Fall ist und

2) darüber hinaus der Einfluß dieser Verbindung in reproduzierbarer Weise bei den Titrationen berücksichtigt werden kann.

Bei der Titration bis pH 4,5 wird zusätzlich Säure frei:

$$Na_2SiF_6 + H_2SO_4 + 2 H_2O \rightarrow Na_2SO_4 + SiO_2 + 6 HF$$

d.h. der Schwefelsäureverbrauch bis zum Umschlagpunkt verringert sich;

bei der Titration bis pH 9,0 wird zusätzlich Lauge verbraucht:

$$Na_2SiF_6 + 6 NaOH \rightarrow 6 NaF + Na_2SiO_3 + 3 H_2O$$

d.h. der Natronlaugeverbrauch bis zum Umschlagpunkt erhöht sich.

Bei der Titration bis pH 4,5 werden 6 Säure-Äquivalente frei, während bei der Titration bis pH 9,0 6 Alkali-Äquivalente zusätzlich verbraucht werden. Daher muß vor den beiden Titrationen der Fluorgehalt der Natriumorthophosphatlösung, beispielsweise durch eine fluorspezifische Elektrode, ermittelt werden und in Abhängigkeit davon zu der bei der Titration verbrauchten Schwefelsäuremenge ein Zuschlag bzw. von der bei der Titration verbrauchten Natronlauge ein Abzug gemacht werden.

Beim erfindungsgemäßen Verfahren ist der störende Einfluß von Fremdionen wie Eisen, Aluminium usw. ausgeschaltet.

Beispiel 1 (Vergleichsbeispiel)

100.000 kg Natriumdihydrogenphosphat-Lösung mit einer Konzentration von 18,0 Gewichts% $P_2O_5$, welche durch Aufschluß von Rohphosphat mit Schwefelsäure sowie durch Neutralisation der Rohphosphorsäure mit Natronlauge bis pH 9 und Abfiltrieren des Niederschlages (Fällungsreinigung) erhalten worden war, wurde in einer mit den Abgasen eines Sprühturmes betriebenen Anlage gemäß der US-A-3 557 864 auf 28,0 Gewichts% aufkonzentriert.

19.285 kg der aufkonzentrierten Natriumdihydrogenphosphat-Lösung wurden mit 6.667 kg ca. 75 %iger Phosphorsäure, welche durch Verbrennen von gelbem Phosphor und Absorbieren des resultierenden Phosphorpentoxides erhalten worden war, vermischt. Das Gemisch wurde mit Natronlauge auf einen pH-Wert von 7 und durch Zugabe von Wasser auf einen $P_2O_5$-Gehalt von 30,2 Gewichts% eingestellt; ca. 60 % des in ihm enthaltenen $P_2O_5$ war durch Fällungsreinigung von Rohphosphorsäure hergestellt worden.

Von den resultierenden 30.000 kg Natriumorthophosphat-Lösung wurde eine Probe zur Bestimmung ihres $Na_2O : P_2O_5$-Verhältnisses mit $\frac{n}{10}$ Schwefelsäure bis pH 4,5 und mit $\frac{n}{10}$ Natronlauge bis pH 9,0 titriert. Dabei wurden folgende Werte ermittelt:

Titration 1: 13,60 ml $\frac{n}{10}$ $H_2SO_4$

Titration 2: 28,95 ml $\frac{n}{10}$ NaOH

Daraus errechnet sich ein $Na_2O : P_2O_5$-Verhältnis von 1,680 : 1. Durch Zugabe von 98 l ca. 75 %iger Phosphorsäure, welche durch Verbrennen von gelbem Phosphor und Absorbieren des resultierenden Phosphorpentoxides erhalten worden war, wurde die Natriumorthophosphat-Lösung auf das $Na_2O : P_2O_5$-Verhältnis von 1,666 : 1, d.h. auf 66,6 % $Na_2HPO_4$ und 33,4 % $NaH_2PO_4$, zurückgestellt.

Von dieser Natriumorthophosphat-Lösung wurden stündlich 12.750 kg in einem Sprühturm bei einer Temperatur der Turm-Abgase von 345°C versprüht. Das resultierende Produkt wurde aus dem unteren Teil des Sprühturmes abgezogen und in einer mit Wasser indirekt gekühlten Drehtrommel auf etwa 40°C abgekühlt.

Stündlich wurden 6.696 kg Natriumtripolyphosphat mit einem Gehalt von 92,7 % $Na_5P_3O_{10}$ hergestellt.

Beispiel 2 (Vergleichsbeispiel)

30.000 kg Natriumorthophosphat-Lösung wurden in derselben Weise wie in Beispiel 1 angegeben bereitet.

Bei der Titration einer Probe dieser Lösung wurden verbraucht:

13,60 ml $\frac{n}{10}$ Schwefelsäure

28,95 ml $\frac{n}{10}$ Natronlauge

Das entspricht 68,0 Gewichts% $Na_2HPO_4$ und 32,0 Gewichts% $NaH_2PO_4$ bzw. einem $Na_2O : P_2O_5$-Verhältnis von 1,680 : 1.

Der mit Hilfe einer fluorspezifischen Elektrode ermittelte Fluorgehalt der Probe betrug 1.810 ppm. Unter der Annahme, daß das Fluor in der Probe als Natriumfluorosilikat vorliegt, wurde stöchiometrisch errechnet, daß die Titration um 0,29 ml verfälscht war. Die berichtigten Verbräuche wären demnach:

13,60 + 0,29 = 13,89 ml $\frac{n}{10}$ Schwefelsäure

28,95 - 0,29 = 28,66 ml $\frac{n}{10}$ Natronlauge

Das entspricht 67,3 Gewichts% $Na_2HPO_4$ und 32,7 Gewichts% $NaH_2PO_4$ bzw. einem $Na_2O : P_2O_5$-Verhältnis von 1,673 : 1. Durch Zugabe von 49 l durch Verbrennen von gelbem Phosphor gewonnener, ca. 75 %iger Phosphorsäure wurde das $Na_2O : P_2O_5$-Verhältnis der Lösung auf 1,666 : 1 korrigiert.

Diese Lösung wurde wie im Beispiel 1 angegeben im Sprühturm behandelt. Dabei wurden stündlich 6.696 kg Natriumtripolyphosphat mit einem Gehalt von 94,0 % $Na_5P_3O_{10}$ hergestellt.

Beispiel 3 (gemäß der Erfindung)

100.000 kg Natriumdihydrogenphosphat-Lösung gemäß Beispiel 1 wurden wie in Beispiel 1 angegeben aufkonzentriert, jedoch mit dem Unterschied, daß der Lösung während ihrer Aufkonzentrierung 120 kg Natronwasserglas (45 % $Na_2SiO_3$) zugesetzt wurden (entspricht etwa 0,1 % $SiO_2$, bezogen auf $P_2O_5$).

19.285 kg der aufkonzentrierten Natriumdihydrogenphosphat-Lösung wurden mit 8.159 kg durch Verbrennen von gelbem Phosphor gewonnener, ca. 75 %iger Phosphorsäure vermischt. Das Gemisch wurde mit Natronlauge auf einen pH-Wert von 7 und durch Zugabe von Wasser auf einen $P_2O_5$-Gehalt von 30,2 % eingestellt.

Von der resultierenden Natriumorthophosphat-Lösung, deren $P_2O_5$ zu ca. 60 % aus durch Fällungsreinigung von durch Aufschluß von Rohphosphat mit Schwefelsäure gewonnener Rohphosphorsäure stammte, wurde eine Probe titriert. Bei der Titration wurden verbraucht:

$$13,89 \text{ ml } \frac{n}{10} \text{ Schwefelsäure}$$

$$28,65 \text{ ml } \frac{n}{10} \text{ Natronlauge}$$

Der mit Hilfe einer fluorspezifischen Elektrode ermittelte Fluorgehalt der Probe betrug 1.810 ppm. Unter der Annahme, daß nach Zugabe von Natronwasserglas beim Aufkonzentrieren das Fluor quantitativ als Natriumfluorosilikat vorliegt, wurde aus der Stöchiometrie errechnet, daß die Titration um 0,29 ml verfälscht war. Die berichtigten Verbräuche sind demnach:

$$13,89 + 0,29 = 14,18 \text{ ml } \frac{n}{10} \text{ Schwefelsäure}$$

$$28,65 - 0,29 = 28,36 \text{ ml } \frac{n}{10} \text{ Natronlauge}$$

Das entspricht 66,6 Gewichts% $Na_2HPO_4$ und 33,4 Gewichts% $NaH_2PO_4$ bzw. einem $Na_2O : P_2O_5$-Verhältnis von 1,666 : 1. Mithin brauchte die Natriumorthophosphat-Lösung weder mit Phosphorsäure noch mit Natronlauge nachgestellt zu werden.

Diese Lösung wurde wie im Beispiel 1 angegeben im Sprühturm behandelt. Dabei wurden stündlich 6.690 kg Natriumtripolyphosphat mit einem Gehalt von 98,8 % $Na_5P_3O_{10}$ hergestellt.

**Patentansprüche**

1. Verfahren zur Herstellung von Natriumtripolyphosphat durch Einbringen einer Natriumorthophosphatlösung, welche durch Neutralisation von mindestens teilweise durch Fällungsreinigung von durch Aufschluß von Rohphosphaten mit starken Mineralsäuren gewonnener Rohphosphorsäure erhalten und mit Hilfe der Abgase des Sprühturmes aufkonzentriert worden ist und 66,6 Gewichts% Diphosphat und 33,4 Gewichts% Monophosphat enthält, in den oberen Teil eines Sprühturmes, Versprühen der Natriumorthophosphatlösung im Sprühturm mittels mindestens einer Düse durch eine von mehreren kreisförmig angeordneten Brennern erzeugte Flammzone und Sammeln des pulverigen Natriumtripolyphosphates im unteren Teil des Sprühturmes, dadurch gekennzeichnet, daß man der Natriumorthophosphatlösung während ihrer Aufkonzentrierung eine kieselsäurehaltige Verbindung zusetzt.

2. Verfahren nach Anspruch 1, dadurch gekennzeichnet, daß man die kieselsäurehaltige Verbindung entsprechend 0,05 bis 0,5 Gewichts% $SiO_2$, bezogen auf den $P_2O_5$-Gehalt der Natriumorthophoshatlösung, zusetzt.

3. Verfahren nach Anspruch 2, dadurch gekennzeichnet, daß man bis zu 0,3 Gewichts% $SiO_2$ zusetzt.

4. Verfahren nach mindestens einem der Ansprüche 1 bis 3, dadurch gekennzeichnet, daß man als kieselsäurehaltige Verbindung Natronwasserglas zusetzt.

**Claims**

1. A process for the preparation of sodium tripolyphosphate by introduction of a sodium orthophosphate solution, which has been obtained by neutralization and at least partly by precipitation purification of crude phosphoric acid obtained by breakdown of crude phosphates with strong mineral acids and has been concentrated with the aid of the waste gases of the spray tower and comprises 66.6 % by weight of diphosphate and 33.4 % by weight of monophosphate, into the upper part of a spray tower, spraying of the sodium orthophosphate solution in the spray tower, by means of at least one jet, through a flame zone generated by several burners arranged circularly, and collection of the pulverulent sodium tripolyphosphate in the lower part of the spray tower, which comprises adding a compound containing silicic acid to the sodium orthophosphate solution during its concentration.

2. The process as claimed in claim 1, wherein the compound containing silicic acid is added in an amount corresponding to 0.05 to 0.5 % by weight of $SiO_2$, based on the $P_2O_5$ content of the sodium orthophosphate solution.

3. The process as claimed in claim 2, wherein up to 0.3 % by weight of $SiO_2$ is added.

4. The process as claimed in at least one of claims 1 to 3, wherein soda water-glass is added as the compound containing silicic acid.

**Revendications**

1. Procédé pour la fabrication de tripolyphosphate de sodium par introduction d'une solution d'orthophosphate de sodium qui a été obtenue par neutralisation d'acide phosphorique obtenu au moins partiellement par purification par précipitation d'acide phosphorique brut obtenu dans l'attaque des phosphates bruts par des acides minéraux forts et concentrée au moyen des gaz résiduaires de la tour de pulvérisation et qui contient 66,6 % en poids de diphosphate et 33,4 % en poids de monophosphate, dans la partie supérieure d'une tour de pulvérisation, pulvérisation de la solution d'orthophosphate de sodium dans la tour de pulvérisation au moyen d'au moins une buse par une zone de flamme produite par plusieurs brûleurs disposés en cercle et récolte du tripolyphosphate de sodium en poudre dans la partie inférieure de la tour de pulvérisation, caractérisé en ce que l'on ajoute à la solution d'orthophosphate de sodium pendant sa concentration un composé contenant de l'acide silicique.

2. Procédé selon la revendication 1, caractérisé en ce que l'on ajoute le composé contenant de l'acide silicique en quantité correspondant à 0,05 à 0,5 % en poids de $SiO_2$, par rapport à la teneur en $P_2O_5$ de la solution d'orthophosphate de sodium.

3. Procédé selon la revendication 2, caractérisé en ce que l'on ajoute jusqu'à 0,3 % en poids de $SiO_2$.

4. Procédé selon une au moins des revendications 1 à 3, caractérisé en ce que l'on ajoute du silicate de sodium comme composé contenant de l'acide silicique.